# EUROPÄISCHE PATENTSCHRIFT

(11) **EP 1 075 726 B1**
(45) Veröffentlichungstag und Bekanntmachung des Hinweises auf die Patenterteilung: **24.07.2002**
(21) Anmeldenummer: 99927717.1
(22) Anmeldetag: 23.04.1999
(51) Int. Cl.: H02J 9/06

(54) **VERFAHREN UND ANORDNUNG ZUM BEWERKSTELLIGEN EINES UNTERBRECHUNGSFREIEN STROMVERSORGUNGSBETRIEBS EINER SYSTEMEINHEIT**
METHOD AND CONFIGURATION FOR EFFECTING AN INTERRUPTION-FREE POWER SUPPLY OPERATION OF A SYSTEM UNIT
PROCEDE ET DISPOSITIF POUR FAIRE FONCTIONNER UNE UNITE DE SYSTEME AVEC UNE ALIMENTATION EN COURANT SANS INTERRUPTIONS

(30) Priorität: 28.04.1998 DE 19818986
(43) Veröffentlichungstag der Anmeldung: 14.02.2001
(73) Patentinhaber: Fujitsu Siemens Computers GmbH, 81739 München (DE)
(72) Erfinder: MÜHSAM, Gerhard, D-86343 Königsbrunn (DE)
(74) Vertreter: Hermann, Uwe, Dipl.-Ing.
(86) Internationale Anmeldenummer: DE9901225
(87) Internationale Veröffentlichungsnummer: WO9956375

(56) Entgegenhaltungen:
- WO-A-97/14206
- WO-A-97/21267
- DE-A- 4 417 924
- US-A- 4 659 942
- US-A- 4 761 563
- US-A- 5 602 805
- "POWER CONTROL BY HOSTS TO SHARED DEVICES SUCH AS DIRECT ACCES STORAGE DEVICES" IBM TECHNICAL DISCLOSURE BULLETIN, Bd. 30, Nr. 8, Januar 1988 (1988-01), Seiten 430-432, XP002117951 USA in der Anmeldung erwähnt

## Beschreibung

Die Erfindung betrifft ein Verfahren und eine Anordnung zum Bewerkstelligen eines unterbrechungsfreien Stromversorgungsbetriebs einer Systemeinheit gemäß dem Oberbegriff des Anspruchs 1 bzw. 5.

Cluster sind Rechnersysteme mit mehreren Stationsrechnern, sogenannten Servern, die gemeinschaftlich ein sogenanntes "shared peripheral cabinet" benutzen. Ein "shared peripheral cabinet" ist eine Systemeinheit, die durch eine Systemspeicherkomponente gebildet ist. Ein Plattenspeichersystem ist beispielsweise eine solche Komponente.

Die Komponenten solcher Cluster können an unterschiedlichen Orten aufgestellt sein.

Die Cluster müssen gegen Stromausfall gesichert sein. Bekannt ist, alle Geräte, das heißt alle Server und das "shared peripheral cabinet" an eine einzige, sehr große unterbrechungsfreie Stromversorgung anzuschließen.

Ein entsprechendes Beispiel ist aus dem Internet in tschechischer Sprache auf der Seite
http://ns.prosek.cz/ups/emas_soft.htm1, in englischer Sprache auf der Seite http://www.masterguard.de/asi/8/emas_soft.htm1 und in deutscher Sprache auf der Seite
http://www.masterguard.de/asi/8/dmas_soft.htm1 bekannt. Die tschechische Seite ist laut der Ergebnisseite von AltaVista™ nach einer in allen Sprachen gehaltenen Internetsuche nach dem Stichwort "PowerProtect NET", Punkt 1 zuletzt am 23.9.1997 geändert worden.

Nachteilig ist, dass eine Ortsabhängigkeit gegeben ist, da alle Komponenten an die große unterbrechungsfreie Stromversorgung anzuschließen sind. Ein weiterer Nachteil ist, dass bei Ausfall der einen großen unterbrechungsfreien Stromversorgung sofort der ganze Cluster funktionsuntüchtig ist. Insbesondere ist die gemeinsam genutzte Speicherkomponente ohne Versorgungsstrom, was zu unwiederbringlichen Datenverlusten führen kann. Außerdem ist eine angemessen große unterbrechungsfreie Stromversorgung nicht immer handelsüblich, so dass teure Sonderanfertigungen nötig sein können.

Neben diesem Stand der Technik ist aus der Druckschrift IBM Technical Disclosure Bulletin, Januar 1988, Seiten 430 bis 432, eine Schaltereinheit bekannt, die eine Stromversorgungsüberwachung in Systemen ermöglicht, in denen zum Beispiel mehrere Rechnereinheiten mit einer gemeinsam genutzten Speicherkomponente zusammenarbeiten. Die einzelnen Systemkomponenten haben dabei jeweils ihre eigene Stromversorgung und sind jeweils mit der Schaltereinheit verbunden. Die Schaltereinheit ermöglicht es, durch Betätigen verschiedener Schalter die Abschaltung aller oder einzelner Systemkomponentenstromversorgungen zu veranlassen, sei es, weil ein Notfall vorliegt, oder sei es, weil an einer einzelnen Systemkomponente Servicearbeiten fällig sind. Die Abschaltung der Stromversorgung nimmt die jeweilige zugehörige Systemkomponente selbst vor. Solange nur Rechnereinheiten von Stromversorgungsabschaltungen betroffen sind, können die jeweils noch vorhandene anderen Rechnereinheiten mit der gemeinsam genutzten Speicherkomponente zusammenarbeiten. Nachteilig ist, dass, wie oben erwähnt, jede Systemkomponente ihre eigene Stromversorgung hat und von deren Funktionieren abhängig ist.

Aus den Druckschriften Funkschau, 25/96, Seiten 46 bis 49 und eee, Nr. 16, August 1990, Seiten 40 bis 42 sind allgemein unterbrechungsfreie Stromversorgungen bekannt.

Zudem sind aus der US-A-4 659 942 und der US-A-4 761 563 Systeme mit jeweils mehreren unterbrechungsfreien Stromversorgungen bekannt. Die Stromversorgungen sind redundant und so miteinander verschaltet, daß bei Ausfall einer der Stromversorgungen die Stromversorgung durch eine andere unterbrechungsfreie Stromversorgung sichergestellt wird.

Aufgabe der vorliegenden Erfindung ist, ein Verfahren und eine Anordnung zum Bewerkstelligen eines unterbrechungsfreien Stromversorgungsbetriebs einer Systemeinheit, insbesondere einer Speicherkomponente in einem Rechnersystem gemäß der eingangs genannten Art anzugeben, die fehlertolerant und ohne lokale Bindung realisierbar ist.

Für das Verfahren wird diese Aufgabe mit den Verfahrensschritten gemäß dem kennzeichnenden Teil des Anspruchs 1 gelöst. Für die Anordnung wird diese Aufgabe gemäß den Merkmalen des Anspruchs 5 gelöst.

Sowohl mit dem Verfahren als auch mit der Anordnung kann ein unterbrechungsfreier Stromversorgungsbetrieb einer Systemeinheit in einem Rechnersystem mit mehreren, die Systemeinheit gemeinsam nutzenden Stationsrechnern bewerkstelligt werden, die fehlertolerant und ohne lokale Bindung realisierbar ist.

Die Unabhängigkeit der lokalen Bindung und die Fehlertolerantheit wird dadurch bewerkstelligt, dass jeder Stationsrechner vor Ort an eine eigene unterbrechungsfreie Stromversorgung angeschlossen ist bzw. von einer solchen mit Strom versorgt wird, und dass die gemeinsam genutzte Systemeinheit, die Speicherkomponente also, über einen spannungsüberwachenden automatischen Umschalter mit jeweils einer der aktiven unterbrechungsfreien Stromversorgungen verbunden ist. Auf diese Weise kann einmal eine unterbrechungsfreie Stromversorgung eines Stationsrechners ausfallen (Netzausfall/Defekt/-Servicefall) und die gemeinsam genutzte Systemeinheit wird dennoch mit Strom versorgt. Da jede Stationseinheit eine eigene unterbrechungsfreie Stromversorgung hat, können diese auch an unterschiedlichsten Orten aufgestellt sein. Die Orte können zudem auseinander liegen.

Ein weiterer Vorteil der dezentralen Stromversorgung ist, dass für die jeweiligen unterbrechungsfreien Stromversorgungen, da sie nicht so groß gewählt sein müssen, in einer Leistungsklasse sein können, die handelsüblich ist. Ein spannungsüberwachender Umschalter ist ebenfalls handelsüblich und funktioniert ohne spezielle unterbrechungsfreie Stromversorgungs-Überwachungssoftware für Mehrserveranwendungen. Über den spannungsüberwachenden automatischen Umschalter, der die Eingangsspannungen überwacht, wird die gemeinsam genutzte Systemeinheit immer mit der Spannung einer aktiven unterbrechungsfreien Stromversorgung versorgt.

Vorteilhafte Ausgestaltungen der Erfindung sind Gegenstand von Unteransprüchen.

In Bezug auf das Verfahren können die einzelnen unterbrechungsfreien Stromversorgungen über eine jeweils gleiche Phase mit Strom versorgt werden. Eine lokale Bindung ist dadurch nicht gegeben. Das Rechnersystem bleibt fehlertolerant, solange eine unterbrechungsfreie Stromversorgung und nicht die Versorgungsphase ausfällt. Der Vorteil ist, dass das Rechnersystem betrieben werden kann, wenn nur eine Phase zur Verfügung steht.

Stehen mehrere Phasen zur Verfügung, können die einzelnen unterbrechungsfreien Stromversorgungen von den verschiedenen Phasen mit Strom versorgt werden. Das hat den zusätzlichen Vorteil, dass auch eine einzelne Phase ausfallen kann, ohne dass das gesamte Rechnersystem bzw. die gemeinsam genutzte Speicherkomponente dadurch beeinträchtigt wird.

Ein ähnlicher Effekt wird erzielt, wenn die verschiedenen unterbrechungsfreien Stromversorgungen zwar nicht mit unterschiedlichen Phasen aber mit einer jeweils eigenständig abgesicherten gleichen Phase betrieben werden. An verschiedenen Orten ist es möglich, dass zwar jeweils die gleiche Phase vorliegt. Dass sie aber, weil sie von einer jeweils anderen Einspeisung her stammen, eigens abgesichert sind. Das heißt, fällt an einem Ort die Phase aus, kann sie an den anderen Orten noch vorhanden sein.

Die Phasenredundanz erhöht die Sicherheit und Verfügbarkeit des Rechnersystems.

Nachfolgend wird ein Ausführungsbeispiel der Erfindung anhand einer Zeichnung näher erläutert.

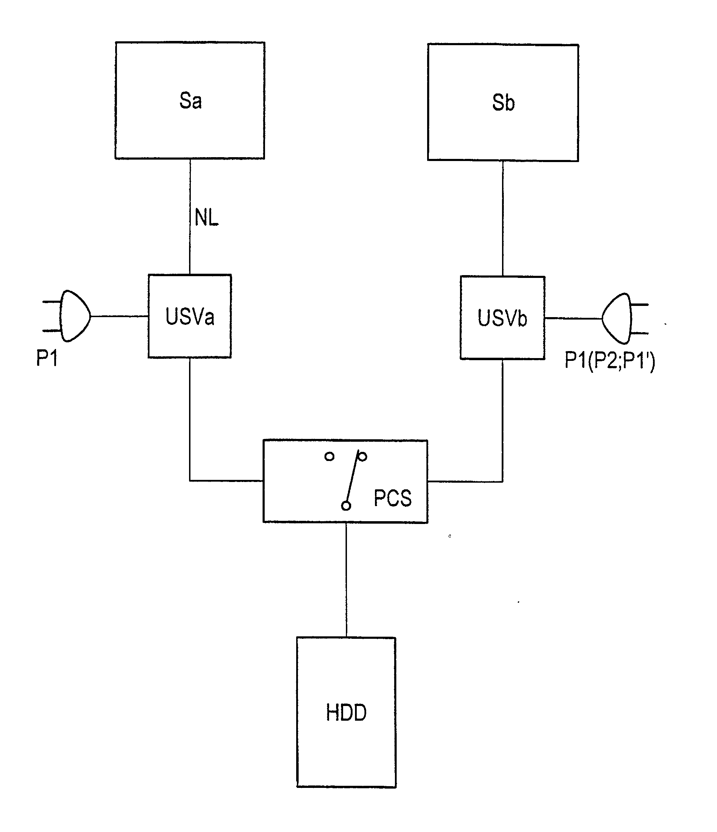

In der einzigen Figur ist ein Rechnersystem mit zwei Stationsrechner Sa und Sb gezeigt, die über jeweilige unterbrechungsfreie Stromversorgungen USVa und USVb an jeweilige Versorgungsphasen angeschlossen sind. Im Ausführungsbeispiel ist das eine Phase P1 sowohl für die eine unterbrechungsfreie Stromversorgung USVa als auch für die andere unterbrechungsfreie Stromversorgung USVb.

Wie in der Figur aber beispielsweise für die unterbrechungsfreie Stromversorgung USVb angedeutet ist, könnten die unterbrechungsfreien Stromversorgungen auch an unterschiedlichen Phasen, z.B. P1 und P2, oder an gleichen aber unterschiedlich abgesicherten Phasen P1 und P1' angeschlossen sein.

Sämtliche unterbrechungsfreien Stromversorgungen USVa, USVb sind an Eingangsanschlüssen eines die Eingangsanschlüsse spannungsüberwachenden automatischen Umschalters PCS (Powercheck Switch) angeschlossen. An einen Ausgangsanschluss des Umschalters PCS ist die von den jeweiligen Stationsrechnern Sa, Sb gemeinsam genutzte Systemeinheit HDD, im vorliegenden Fall eine Speicherkomponente, beispielsweise ein Plattenspeicher, angeschlossen.

Die Verbindung zwischen den einzelnen Komponenten wird durch Netzleitungen NL bewerkstelligt.

Der spannungsüberwachende Umschalter PCS überwacht die an den Eingangsanschlüssen anliegenden Spannungen. Fällt an dem Eingangsanschluss die Spannung aus, der von dem Umschalter PCS gerade mit dem Ausgangsanschluss verbunden ist, schaltet der Umschalter automatisch auf einen Eingangsanschluss um, an dem eine Spannung anliegt. Auf diese Weise wird die gemeinsam genutzte Systemeinheit HDD stets mit Spannung versorgt, ohne dass hierfür eine eigene unterbrechungsfreie Stromversorgung benötigt wird.

## Patentansprüche

1. Verfahren zum Bewerkstelligen eines unterbrechungsfreien Stromversorgungsbetriebs einer Systemeinheit (HDD) in einem Rechnersystem mit mehreren, die Systemeinheit (HDD) gemeinsam nutzenden Stationsrechnern (Sa; Sb), **dadurch gekennzeichnet, dass** der Betrieb der jeweiligen Stationsrechner (Sa; Sb) jeweils mit eigenen unterbrechungsfreien Stromversorgungen (USVa; USVb) durchgeführt und zur Stromversorgung der gemeinsam genutzten Systemeinheit (HDD) die gemeinsam genutzte Systemeinheit (HDD) durch einen automatisch umschaltenden spannungsüberwachenden Umschalter (PCS) stets an eine aktive unterbrechungsfreie Stromversorgung (z.B. USVb) mit angeschlossen wird.

2. Verfahren nach Anspruch 1, **dadurch gekennzeichnet, dass** verschiedene unterbrechungsfreie Stromversorgungen (USVa, USVb) mit gleichen Phasen (P1, P1) versorgt werden.

3. Verfahren nach Anspruch 1, **dadurch gekennzeichnet, dass** verschiedene unterbrechungsfreie Stromversorgungen (USVa, USVb) mit verschiedenen Phasen (P1, P2) versorgt werden.

4. Verfahren nach Anspruch 1, **dadurch gekennzeichnet, dass** verschiedene unterbrechungsfreie Stromversorgungen (USVa, USVb) mit gleichen aber separat abgesicherten Phasen (P1, P1') versorgt werden.

5. Anordnung zum Bewerkstelligen eines unterbrechungsfreien Stromversorgungsbetriebs einer Systemeinheit (HDD) in einem Rechnersystem mit mehreren, die Systemeinheit (HDD) gemeinsam nutzenden Stationsrechnern (Sa; Sb), **dadurch gekennzeichnet, dass** jeder Stationsrechner (Sa; Sb) an eine eigene unterbrechungsfreie Stromversorgung (USVa; USVb) angeschlossen ist, dass die jeweiligen unterbrechungsfreien Stromversorgungen (USVa; USVb) außer an die jeweiligen Stationsrechner (Sa; Sb) an jeweilige Eingangsanschlüsse eines an den Eingangsanschlüssen spannungsüberwachenden, automatisch auf einen spannungsführenden Eingangsanschluss umschaltenden und dadurch den spannungsführenden Eingangsanschluss mit einem Ausgangsanschluss verbindenden Umschalters (PCS) angeschlossen sind, und dass an den Ausgangsanschluss des Umschalters (PCS) die gemeinsam genutzte Systemeinheit (HDD) angeschlossen ist.

6. Anordnung nach Anspruch 5, **dadurch gekennzeichnet, dass** die Stationsrechner (Sa; Sb) Server und die gemeinsam genutzte Systemeinheit (HDD) eine Systemspeicherkomponente sind.

7. Anordnung nach Anspruch 6, **dadurch gekennzeichnet, dass** die Systemspeicherkomponente ein Plattenspeichersystem ist.

## Claims

1. Method for providing uninterruptable power supply operation for a system unit (HDD) in a computer system having a number of station computers (5a; 5b) which use the system unit (HDD) jointly, **characterized in that** each station computer (Sa; Sb) is in each case operated using its own uninterruptable power supplies (USVa; USVb) and, in order to supply power to the jointly used system unit (HDD), the jointly used system unit (HDD) is always also connected to an active uninterruptable power supply (for example USVb) by means of an automatically switching, voltage-monitoring changeover switch (PCS).

2. Method according to Claim 1, **characterized in that** different uninterruptable power supplies (USVa, USVb) are supplied with the same phases (P1, P1).

3. Method according to Claim 1, **characterized in that** different uninterruptable power supplies (USVa, USVb) are supplied with different phases (P1, P2).

4. Method according to Claim 1, **characterized in that** different uninterruptable power supplies (USVa, USVb) are supplied with the same, but separately protected, phases (P1, P1').

5. Arrangement for providing uninterruptable power supply operation for a system unit (HDD) in a computer system having a number of station computers (Sa; Sb) which use the system unit (HDD) jointly, **characterized in that** each station computer (Sa; Sb) is connected to its own uninterruptable power supply (USVa; USVb), **in that** each of the uninterruptable power supplies (USVa; USVb) is connected not only to the respective station computer (Sa; Sb) but also to respective input connections of a changeover switch (PCS) which monitors the voltage of the input connections, automatically switches to a live input connection, and thus connects the live input connection to an output connection, and **in that** the jointly used system unit (HDD) is connected to the output connection of the changeover switch (PCS).

6. Arrangement according to Claim 5, **characterized in that** the station computers (Sa; Sb) are servers, and the jointly used system unit (HDD) is a system memory component.

7. Arrangement according to Claim 6, **characterized in that** the system memory component is a disk storage unit.

## Revendications

1. Procédé pour réaliser un fonctionnement d'alimentation en courant sans interruption d'une unité de système (HDD) dans un système informatique comportant plusieurs ordinateurs (Sa ; Sb) utilisant en commun l'unité de système (HDD), **caractérisé par le fait que** le fonctionnement de l'ordinateur respectif (Sa ; Sb) est assuré respectivement avec des alimentations en courant sans interruption (USVa, USVb) particulières et que, pour l'alimentation en courant de l'unité de système (HDD) utilisée en commun, l'unité de système (HDD) utilisée en commun est constamment raccordée par un commutateur (PCS) surveillant la tension et à commutation automatique à une alimentation en courant sans interruption active (par exemple USVb).

2. Procédé selon la revendication 1, **caractérisé par le fait que** différentes alimentations en courant sans interruption (USVa, USVb) sont alimentées avec des phases identiques (P1, P1).

3. Procédé selon la revendication 1, **caractérisé par le fait que** différentes alimentations en courant sans interruption (USVa, USVb) sont alimentées avec des phases différentes (P1, P2).

4. Procédé selon la revendication 1, **caractérisé par le fait que** différentes alimentations en courant sans interruption (USVa, USVb) sont alimentées avec des phases (P1, P1') identiques mais protégées séparément.

5. Dispositif pour réaliser un fonctionnement d'alimentation en courant sans interruption d'une unité de système (HDD) dans un système informatique comportant plusieurs ordinateurs (Sa ; Sb) utilisant en commun l'unité de système (HDD), **caractérisé par le fait que** chaque ordinateur (Sa ; Sb) est raccordé à une alimentation en courant sans interruption (USVa ; USVb) particulière, que les alimentations en courant sans interruption (USVa ; USVb) respectives sont raccordées, outre aux ordinateurs (Sa ; Sb) respectifs, à des bornes d'entrée respectives d'un commutateur (PCS) qui surveille la tension aux bornes d'entrée, qui commute automatiquement sur une borne d'entrée conduisant une tension et qui relie ainsi la borne d'entrée conduisant une tension à une borne de sortie et que l'unité de système utilisée en commun (HDD) est raccordée à la borne de sortie du commutateur (PCS).

6. Dispositif selon la revendication 5, **caractérisé par le fait que** les ordinateurs (Sa ; Sb) sont des serveurs et l'unité de système utilisée en commun (HDD) est un élément de mémoire de système.

7. Dispositif selon la revendication 6, **caractérisé par le fait que** l'élément de mémoire de système est un système de mémoire à disques.
